# EUROPÄISCHE PATENTSCHRIFT

(11) **EP 2 644 934 B1**
(45) Veröffentlichungstag und Bekanntmachung des Hinweises auf die Patenterteilung: **28.11.2018**
(21) Anmeldenummer: 13000487.2
(22) Anmeldetag: 31.01.2013
(51) Int. Cl.: F16F 13/26

(54) **Hydrolager**
Hydraulic support
Couche hydraulique

(30) Priorität: 29.03.2012 DE 102012006282
(43) Veröffentlichungstag der Anmeldung: 02.10.2013
(73) Patentinhaber: Vibracoustic GmbH, 64293 Darmstadt (DE)
(72) Erfinder: Hettler, Werner, 68309 Mannheim (DE)
(74) Vertreter: Flügel Preissner Schober Seidel

(56) Entgegenhaltungen:
- EP-A2- 1 249 635
- DE-A1- 4 141 332
- JP-A- 2009 127 744
- US-A- 4 789 143
- US-A1- 2001 013 677
- US-A1- 2002 105 122
- US-A1- 2003 151 179

## Beschreibung

### Technisches Gebiet

Die Erfindung betrifft ein Hydrolager, umfassend ein Traglager und ein Auflager, die durch einen im Wesentlichen hohlkegelförmig ausgebildeten Federkörper aus gummielastischem Werkstoff aufeinander abgestützt sind und einen Arbeitsraum und einen Ausgleichsraum begrenzen, die mit Dämpfungsflüssigkeit gefüllt und auf ihren einander axial zugewandten Seiten durch eine Trennwand räumlich voneinander getrennt und flüssigkeitsleitend miteinander verbunden sind, wobei die Trennwand eine durch einen Verschlusskörper verschließbare erste Durchbrechung aufweist und wobei der Verschlusskörper durch ein Stellglied einer Stellvorrichtung bedarfsweise in Offen- oder Geschlossenstellung bringbar ist.

### Stand der Technik

Ein solches Hydrolager ist aus der DE 41 41 332 A1 bekannt. Die Stellvorrichtung ist durch eine druckmittelbeaufschlagbare Steuerdruckdose gebildet und umfasst als Stellglied einen Kolben, der pneumatisch betätigbar ist. Die Steuerdruckdose ist durch eine zumindest teilweise elastisch nachgiebige erste Ringmembran begrenzt, die den Kolben und die Steuerdruckdose gegenüber dem Gehäuse des vorbekannten Hydrolagers abdichtet.

Das Stellglied ist, in Abhängigkeit von den jeweiligen Gegebenheiten des Anwendungsfalles, mit Überdruck oder Unterdruck beaufschlagbar.

Das Stellglied ist axial in Richtung der eingeleiteten Schwingungen hin und her beweglich, um die zentral in der Trennwand angeordnete erste Durchbrechung bedarfsweise zu öffnen oder zu verschließen.

JP 2009-127744 A betrifft ein Hydrolager, das eine Trennwand aufweist, welche über die Öffnung und den Kanal eine Fluidverbindung zwischen der Arbeitskammer und der Ausgleichskammer herstellt. Die Öffnung kann durch Drehen eines Ventilkörpers geöffnet oder geschlossen werden.

US 2001/013677 A1 offenbart ebenfalls ein Hydrolager, in dessen Trennwand eine Fluidbegrenzung eingebaut ist. Das hydraulische Fluid in dem Hydrolager fließt von der Arbeitskammer über Öffnungen in die Räume, welche im Uhrzeigersinn jeweils rechts von den Flügeln vorgesehen sind. Durch den Druck bewegen sich die Flügel gegen den Uhrzeigersinn, sodass das Fluid über Öffnungen in die Ausgleichskammer fließen kann.

US 2003/151179 A1 befasst sich mit einem Hydrolager, bei dem in einer Trennwand zwischen einer Arbeitskammer und einer Ausgleichskammer ein Ventilkörper zur Steuerung des Flusses zwischen den Kammern vorgesehen ist. Ein Drehaktuator treibt eine Drehscheibe mit radial angeordneten Öffnungen und Stegen an. Je nachdem ob die Öffnungen den Ausnehmungen oder den Vorsprüngen einer Begrenzungsplatte gegenüberliegen, kann Flüssigkeit von der Arbeitskammer über Öffnungen, welche in einer Öffnungsplatte vorgesehen sind, in die Ausgleichskammer fließen oder nicht.

US 4 789 143 A befasst sich ebenfalls mit einem Hydrolager, bei der eine Arbeitskammer durch eine Trennwand von einer Ausgleichskammer separiert ist. Über eine Öffnung strömt Fluid von der Arbeitskammer je nach Stellung eines Ventilkörpers in einen ersten Kanal, in einen zweiten Kanal oder in beide Kanäle. Die Länge der Kanäle ist unterschiedlich, so dass auf diese Weise das Dämpfungsverhalten des Hydrolagers beeinflusst wird.

### Darstellung der Erfindung

Der Erfindung liegt die Aufgabe zugrunde, ein Hydrolager der eingangs genannten Art derart weiterzuentwickeln, dass es ohne eine Differenzdruckbeaufschlagung schaltbar ist. Außerdem soll das Hydrolager kompakte Abmessungen in axialer Richtung aufweisen, einfach und kostengünstig herstellbar sein und gleichbleibend gute Gebrauchseigenschaften während einer langen Gebrauchsdauer aufweisen.

Diese Aufgabe wird erfindungsgemäß mit den Merkmalen von Patentanspruch 1 gelöst. Auf vorteilhafte Ausgestaltungen nehmen die Unteransprüche Bezug.

Zur Lösung der Aufgabe ist es vorgesehen, dass der Verschlusskörper durch ein sich in Richtung der eingeleiteten Schwingungen erstreckendes, im Wesentlichen hohlzylinderförmiges Gehäuse mit zumindest einer in radialer Richtung offenen zweiten Durchbrechung in der Gehäusewand gebildet ist und durch zumindest ein in Umfangsrichtung des Gehäuses verdrehbares Schließglied für die zweite Durchbrechung, wobei das Stellglied der Stellvorrichtung elektrisch betätigbar ist und wobei das Stellglied und das Schließglied drehfest miteinander verbunden sind.

Insbesondere bei Verwendung schaltbarer Hydrolager in Kraftfahrzeugen wird die Bereitstellung von einem ausreichend großen Differenzdruck zur Schaltung des Lagers in Zukunft immer schwieriger, weil Über- oder Unterdruck in Kraftfahrzeugen zumeist nicht mehr problemlos verfügbar sein wird. Werden die Kraftfahrzeuge beispielsweise zumindest teilweise durch einen Elektromotor angetrieben, kann der im Saugrohr einer Verbrennungskraftmaschine oder in einem daran angeschlossenen Druckspeicher vorhandene Unterdruck zur Schaltung eines Hydrolagers nicht mehr genutzt werden. Die Bereitstellung eines Überdrucks ist konstruktiv vergleichsweise aufwendig.

Elektrisch schaltbare Hydrolager können problemlos auch dann zur Anwendung gelangen, wenn ausreichend großer Über- oder Unterdruck zur Betätigung des schaltbaren Hydrolagers nicht zur Verfügung steht.

Durch die besondere Ausgestaltung des Verschlusskörpers weist das erfindungsgemäße Hydrolager kompakte Abmessungen in axialer Richtung auf. Eine Bewegung des Verschlusskörpers axial in Richtung der eingeleiteten Schwingungen erfolgt nicht; die strömungsleitende Verbindung vom Arbeitsraum in den Ausgleichsraum und wieder zurück durch die erste Durchbrechung hindurch erfolgt durch eine Umleitung der Dämpfungsflüssigkeit von einer axialen in eine radiale Richtung und umgekehrt.
Wird beispielsweise Dämpfungsflüssigkeit vom Arbeitsraum in den Ausgleichsraum durch die erste Durchbrechung hindurch verdrängt, strömt die Dämpfungsflüssigkeit axial in Richtung der eingeleiteten Schwingungen axial durch die erste Durchbrechung in das hohlzylinderförmige Gehäuse, wird anschließend in radialer Richtung umgelenkt und strömt durch die in radialer Richtung offene zweite Durchbrechung in der Gehäusewand des Verschlusskörpers in den Ausgleichsraum. Die Trennwand umfasst zur Isolierung höherfrequenter kleinamplitudiger Schwingungen eine Membran, die schwingfähig zwischen dem Arbeitsraum und dem Ausgleichsraum angeordnet ist. Das Schließglied kann mit einer Verstelleinrichtung zur Verstellung der Schwingfähigkeit der Membran ausgebildet sein.

Die Strömung von Dämpfungsflüssigkeit aus dem Ausgleichsraum in den Arbeitsraum erfolgt in umgekehrter Richtung. Die Dämpfungsflüssigkeit aus dem Ausgleichsraum strömt in radialer Richtung durch die offene zweite Durchbrechung in der Gehäusewand in den Verschlusskörper ein und verlässt den Verschlusskörper axial in Richtung des Arbeitsraums.

Ein Verschließen der ersten Durchbrechung erfolgt dadurch, dass das in Umfangsrichtung des Gehäuses verdrehbare Schließglied vor die zweite Durchbrechung bewegt wird und dadurch eine Strömung der Dämpfungsflüssigkeit zwischen Arbeitsraum und Ausgleichsraum durch die erste Durchbrechung hindurch verhindert. Das Schließglied ist dadurch in Umfangsrichtung des Gehäuses verdrehbar, dass es drehfest mit dem Stellglied verbunden ist. Durch die Bewegung des Stellglieds wird auch das Schließglied in Umfangsrichtung bewegt.

Die Bewegung des Stellglieds kann im Sinne von "zweite Durchbrechung offen/zweite Durchbrechung verschlossen " für einfachere Anwendungen oder stufenlos erfolgen, wobei in einem solchen Fall unterschiedlich große Strömungsquerschnitte durch die zweite Durchbrechung stufenlos freigegeben werden. Eine solche Betätigung ist aufwendiger und entsprechend für höherwertige Anwendungen.

Nach einer vorteilhaften Ausgestaltung kann es vorgesehen sein, dass mehrere gleichmäßig in Umfangsrichtung verteilt angeordnete zweite Durchbrechungen durch eine entsprechende Anzahl gleichmäßig in Umfangsrichtung verteilt angeordneter Schließflügel des Schließglieds verschließbar sind.
Die Anzahl der Durchbrechungen und/oder der Strömungsquerschnitt durch diese hindurch sind von den jeweiligen Zielvorgaben abhängig.

Für viele Anwendungsfälle hat es sich als vorteilhaft bewährt, wenn jeweils zwei bis sechs zweite Durchbrechungen und Schließflügel zur Anwendung gelangen. Der Drehwinkel, den die Schließflügel zum Verschließen der zweiten Durchbrechungen zurücklegen müssen, beträgt bei zwei Durchbrechungen und zwei Schließflügeln 90°. Demgegenüber beträgt der Drehwinkel 60°, wenn drei zweite Durchbrechungen und Schließflügel zur Anwendung gelangen.
Der Drehwinkel beträgt demgegenüber nur noch 30°, wenn sechs Schließflügel sechs zweite Durchbrechungen bedarfsweise verschließen.
Ist eine besonders schnelle Schaltbarkeit des Hydrolagers gefordert, ist von Vorteil, wenn die Drehwinkel, die von den Schließflügeln zum Verschließen der zweiten Durchbrechungen zurückgelegt werden müssen, möglichst klein sind. Dieser schnellen Schaltbarkeit steht ein etwas höherer Fertigungsaufwand durch die höhere Anzahl der zweiten Durchbrechungen und Schließflügel gegenüber.

Es ist von hervorzuhebendem Vorteil, dass sich durch das erfindungsgemäße Hydrolager kurze Schaltzeiten mit großen Querschnittsänderungen bei kleinem Platzbedarf realisieren lassen.

Das Schließglied kann aus einem polymeren Werkstoff bestehen. Die Herstellbarkeit des Schließglieds ist dadurch einfach und kostengünstig möglich, auch dann, wenn mehrere Schließflügel zum bedarfsweisen Öffnen oder Verschließen mehrerer Durchbrechungen zur Anwendung gelangen. Außerdem ist von Vorteil, dass das Schließglied dadurch nur eine geringe Masse und daraus resultierend eine geringe Trägheit bei Betätigung durch das Stellglied aufweist. Im Hinblick auf eine schnelle Schaltung des Hydrolagers ist das von hervorzuhebendem Vorteil.

Die Schließflügel können einstückig ineinander übergehend und materialeinheitlich ausgebildet sein. Dadurch weist das Schließglied einen einfachen und teilearmen Aufbau auf. Die Montage des Hydrolagers ist dadurch vereinfacht und die Gefahr von Montagefehlern ist auf ein Minimum reduziert. Das Gehäuse und die Trennwand können einstückig ineinander übergehend und materialeinheitlich ausgebildet sein. Wie zuvor bereits beschrieben, trägt auch eine solche Ausgestaltung zu einem einfachen und teilearmen Aufbau des Hydrolagers bei und zu dessen prozesssicherer Montage. Das Gehäuse, das sich bevorzugt von der Trennwand axial in den Ausgleichsraum erstreckt, kann dann, wenn die Trennwand als Düsenkäfig ausgebildet ist und eine obere und eine untere Düsenscheibe umfasst, mit der Düsenscheibe einstückig ineinander übergehend und materialeinheitlich ausgebildet sein, die den Ausgleichsraum in axialer Richtung begrenzt.

Gemäß einer vorteilhaften Ausgestaltung kann es vorgesehen sein, dass das Gehäuse und das Schließglied aus einer selbstschmierenden Werkstoffpaarung bestehen. Das Schließglied kann zum Beispiel, wie zuvor bereits ausgeführt, aus einem polymeren Werkstoff bestehen, beispielsweise aus einem PTFE-Werkstoff. Dadurch besteht die Möglichkeit, das Schließglied mittels des Gehäuses zu führen, wobei durch die selbstschmierende Werkstoffpaarung eine leichtgängige und verschleißarme Verdrehbarkeit des Schließglieds relativ zum Gehäuse während einer langen Gebrauchsdauer sichergestellt ist.

Die erste Durchbrechung kann zentral in der Trennwand angeordnet sein. Insbesondere für ein im Wesentlichen rotationssymmetrisch ausgebildetes Hydrolager ist eine solche Ausgestaltung bezüglich einer guten Funktion und einer einfachen Fertigung von Vorteil.

Die offene erste Durchbrechung kann als Tilgerkanal zur Tilgung von Leerlaufschwingungen einer Verbrennungskraftmaschine ausgebildet sein. Während des Leerlaufs der Verbrennungskraftmaschine schwingt die Flüssigkeitssäule durch den Tilgerkanal, der in diesem Fall aus der ersten Durchbrechung und dem Gehäuse des Verschlusskörpers sowie dem Schließglied des Verschlusskörpers besteht, zwischen dem Arbeitsraum und dem Ausgleichsraum phasenverschoben hin und her, um die Leerlaufschwingungen zu tilgen. Durch das Freigeben der ersten Durchbrechung kann die Dämpfung im niederfrequenten Bereich ausgeschaltet werden, um einen Tilger zur Tilgung der Leerlaufschwingungen einzustellen.

Der Ausgleichsraum kann auf der der Trennwand axial abgewandten Seite durch eine rollbalgförmig ausgebildete, im Wesentlichen drucklos Volumen aufnehmende Abschlussmembran gebildet sein, wobei die Abschlussmembran ringförmig ausgebildet ist und einen radial inneren Rand aufweist und wobei die Abschlussmembran mit ihrem radial inneren Rand flüssigkeitsdicht mit der Stellvorrichtung oder dem Stellglied oder dem Schließglied verbunden ist. Durch die genannte Ausgestaltung der Abschlussmembran wird eine unerwünschte Erhöhung der dynamischen Steifigkeit des Hydrolagers während der bestimmungsgemäßen Verwendung, wenn sich Dämpfungsflüssigkeit vom Arbeitsraum in den Ausgleichsraum und wieder zurück verlagert, vermieden. Das Schließglied ragt zumindest teilweise in den Ausgleichsraum, um mit dem Gehäuse zusammen den Verschlusskörper für die erste Durchbrechung zu bilden. Dafür ist die Abschlussmembran durchbrochen und muss im Bereich der Durchbrechung abgedichtet sein. Ob der radial innere Rand der Abschlussmembran flüssigkeitsdicht mit der Stellvorrichtung, dem Stellglied oder dem Schließglied verbunden ist, hängt von der Konstruktion des Hydrolagers ab.

Im Gegensatz zum Stellglied und zum Schließglied, die beide funktionsbedingt relativ zur Abschlussmembran verdrehbar sind, gestaltet sich eine flüssigkeitsdichte Festlegung des inneren Rands der Abschlussmembran an der Stellvorrichtung einfacher, weil diese, im Gegensatz zum Stellglied oder dem Schließglied, relativ ortsfest und unverdrehbar zum radial inneren Rand der Abschlussmembran angeordnet ist.

Der radial innere Rand der Abschlussmembran kann durch einen Spannring flüssigkeitsdicht mit der Stellvorrichtung oder dem Stellglied oder am Schließglied festgelegt sein. Die Abdichtung in diesem Bereich ist dadurch auch während einer langen Gebrauchsdauer des Hydrolagers besonders zuverlässig. Der Spannring kann zum Beispiel aus einem gummielastischen Werkstoff bestehen und als O-Ring ausgebildet sein.

Der radial innere Rand der Abschlussmembran kann am Stellglied oder am Schließglied relativ verdrehbar festgelegt sein. Dadurch wird sichergestellt, dass der radial innere Rand der Abschlussmembran bei Betätigung des Schließglieds mittels des Stellglieds der Stellvorrichtung keinen unerwünschten mechanischen Belastungen, zum Beispiel Scherspannungen, ausgesetzt ist. Auch wenn sich das Stellglied und das Schließglied bei Betätigung der Stellvorrichtung relativ zum inneren Rand der Abschlussmembran verdrehen, bleibt das ohne Auswirkungen auf den radial inneren Rand.
Im Hinblick auf eine leichtgängige relative Verdrehbarkeit des radial inneren Rands zum Stellglied oder zum Schließglied kann es vorgesehen sein, dass der radial innere Rand und/oder das Stellglied und/oder das Schließglied mit einer reibungsverringernden Oberflächenbeschichtung versehen sind.
Besteht das Schließglied zum Beispiel aus einem PTFE-Werkstoff, bedarf es am Schließglied keiner zusätzlichen Maßnahmen, um eine leichtgängige Relativverdrehbarkeit zum radial inneren Rand der Abschlussmembran zu erreichen.

Trotz der relativen Verdrehbarkeit ist der innere Rand flüssigkeitsdicht am Stell- oder Schließglied festgelegt.

Die Stellvorrichtung kann ortsfest mit dem Auflager verbunden sein. Dies bedingt eine einfache Konstruktion des Hydrolagers.

Das Auflager kann einen im Wesentlichen topfförmigen Deckel umfassen, der auf der der Trennwand axial abgewandten Seite der Abschlussmembran angeordnet ist, wobei die Stellvorrichtung ortsfest im Deckel angeordnet ist. Der Deckel nimmt in einem solchen Fall nicht nur die Stellvorrichtung auf, sondern schützt auch die vergleichsweise empfindliche Abschlussmembran vor äußeren Einflüssen.
Die axial offene Stirnseite des Deckels kann von der Trennwand überdeckt sein, wobei bevorzugt zwischen der Trennwand und der Stirnseite des Deckels der radial äußere Rand der Abschlussmembran flüssigkeitsdicht eingeklemmt ist.

Gemäß einer vorteilhaften Ausgestaltung ist es vorgesehen, dass die Stellvorrichtung durch einen elektrisch ansteuerbaren Drehmagnet mit einer als Stellglied ausgebildeten Welle gebildet ist.
Im Gegensatz zu anderen elektrisch betätigbaren Stellvorrichtungen, beispielsweise zu einem elektromotorischen Antrieb, der zusammen mit einem Übersetzungsgetriebe zur Anwendung gelangen muss und dadurch teile- und damit auch kostenintensiv ist, sind Drehmagnete in unterschiedlichsten Ausführungen für unterschiedlichste Anwendungsfälle kostengünstig verfügbar und können im erfindungsgemäßen Hydrolager ohne weitere Bauteile, wie beispielsweise Übersetzungsgetriebe, zur Anwendung gelangen.
Gegenüber linearen Schaltmagneten, die einen hohen Platzbedarf in Hubrichtung, also in axialer Richtung haben, können durch Verwendung von Drehmagneten Hydrolager mit kompakten Abmessungen entstehen.
Durch die Verwendung eines Drehmagneten können bei kleinem Bauraumbedarf relativ schnell große Tilgeröffnungen freigegeben werden. Drehmagnete stellen eine kompakte und kostengünstige Lösung für elektrisch schaltbare Hydrolager mit allen vorteilhaften Eigenschaften der bekannten pneumatisch schaltbaren Hydrolager dar.

Die Membran kann zum Beispiel aus einem gummielastischen Werkstoff bestehen.

Die Trennwand kann einen Düsenkäfig mit einer oberen Düsenscheibe und einer unteren Düsenscheibe umfassen, wobei zwischen den Düsenscheiben die Membran angeordnet ist. Eine solche Ausgestaltung von Trennwand und Membran ist bekannt. Höherfrequente kleinamplitudige Schwingungen werden dadurch isoliert.

Der Arbeitsraum und der Ausgleichsraum können zur Dämpfung niederfrequenter großamplitudiger Schwingungen durch einen Dämpfungskanal flüssigkeitsleitend miteinander verbunden sein. Der Dämpfungskanal erstreckt sich bevorzugt im Bereich des außenumfangsseitigen Rands der Trennwand. Zur Dämpfung der niederfrequenten großamplitudigen Schwingungen wird die Flüssigkeitssäule, die sich innerhalb des Dämpfungskanals befindet, zwischen dem Arbeitsraum und dem Ausgleichsraum hin und her verlagert.

Da das Schließglied mit einer Verstelleinrichtung zur Verstellung der Schwingfähigkeit der Membran ausgebildet ist, kann die Schwingfähigkeit der Membran derart verstellt werden, dass sie bei erster offener Durchbrechung geklemmt und bei verschlossener erster Durchbrechung schwingfähig ist.
Ist die erste Durchbrechung offen, soll die Tilgerwirkung für die Leerlaufschwingungen nicht durch eine schwingende Membran nachteilig beeinflusst werden; die Membran ist deshalb geklemmt.
Ist die erste Durchbrechung demgegenüber verschlossen, also zum Beispiel beim Betrieb der Verbrennungskraftmaschine oberhalb der Leerlaufdrehzahl, ist die Membran zwischen dem Arbeits- und dem Ausgleichsraum schwingfähig, zur Isolierung von Schwingungen im höherfrequenten Bereich.

Für die Verstellung der Schwingfähigkeit der Membran kann es vorgesehen sein, dass das Schließglied außenumfangsseitig einen sich radial nach außen erstreckenden Ringvorsprung aufweist, der die Membran zumindest teilweise untergreift, wobei der Ringvorsprung auf seiner der Membran axial zugewandten Stirnseite eine sich in Umfangsrichtung keilförmig erstreckende Klemmfläche aufweist. Durch diese Ausgestaltung wird eine Verdrehung des Schließglieds in eine Hubbewegung der Stirnseite in axialer Richtung umgewandelt. Die Klemmung der Membran ist maximal, wenn die zweiten Durchbrechungen und dadurch auch die erste Durchbrechung frei von der Dämpfungsflüssigkeit durchströmbar sind. Wird das Schließglied demgegenüber derart verschwenkt, dass das Schließglied die zweiten Durchbrechungen im Gehäuse flüssigkeitsdicht verschließt und dadurch auch die erste Durchbrechung von der Dämpfungsflüssigkeit nicht mehr durchströmbar ist, ist die maximale Schwingfähigkeit der Membran gegeben.

Der Ringvorsprung kann in axialer Richtung zwischen der oberen und der unteren Düsenscheibe angeordnet sein. Der Ringvorsprung ist dadurch von der oberen und der unteren Düsenscheibe geführt, so dass die Verstellung der Schwingfähigkeit der Membran besonders zuverlässig funktioniert.

### Kurzbeschreibung der Zeichnung

Fünf Ausführungsbeispiele des erfindungsgemäßen Hydrolagers werden nachfolgend anhand der Figuren 1 bis 8 näher erläutert.

Diese zeigen jeweils in schematischer Darstellung:
- Fig. 1: ein erstes Ausführungsbeispiel, bei dem der innere Rand der Abschlussmembran am Außenumfang des Schließglieds flüssigkeitsdicht festgelegt ist;
- Fig. 2: ein zweites Ausführungsbeispiel, bei dem der radial innere Rand der Abschlussmembran am Gehäuse der Stellvorrichtung flüssigkeitsdicht festgelegt ist;
- Fig. 3: ein drittes Ausführungsbeispiel, bei dem der radial innere Rand der Abschlussmembran das Stellglied der Stellvorrichtung dichtend umschließt;
- Fig. 4: ein viertes Ausführungsbeispiel ähnlich dem Ausführungsbeispiel aus Fig. 2, wobei eine Verstelleinrichtung zur Verstellung der Schwingfähigkeit der Membran vorgesehen ist;
- Fig. 5: ein fünftes Ausführungsbeispiel, das sich von den vorherigen dadurch unterscheidet, dass das Schließglied die erste Durchbrechung in axialer Richtung vollständig durchgreift und einstückig mit der oberen Düsenscheibe der Trennwand ausgebildet ist;
- Fig. 6: einen Querschnitt durch einen ersten Verschlusskörper mit einem Drehwinkel von 90°;
- Fig. 7: einen Querschnitt durch einen zweiten Verschlusskörper mit einem Drehwinkel von 60°, und
- Fig. 8: einen Querschnitt durch einen dritten Verschlusskörper mit einem Drehwinkel von 30°.

### Ausführung der Erfindung

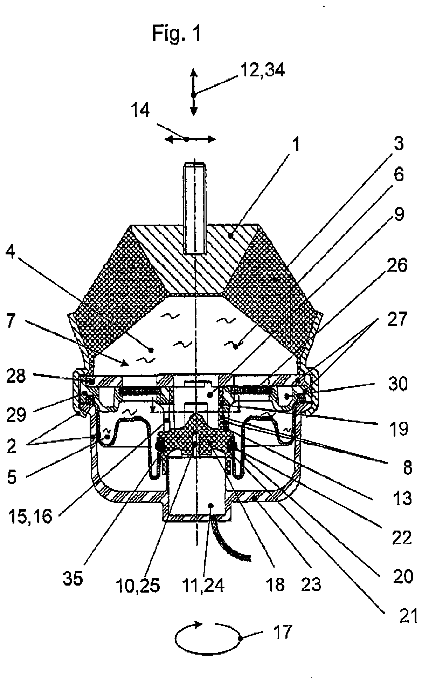

In den Fig. 1 bis 5 ist jeweils ein Ausführungsbeispiel eines Hydrolagers gezeigt. Jedes der Hydrolager umfasst ein Traglager 1 und ein Auflager 2, die durch den Federkörper 3 aus gummielastischem Werkstoff aufeinander abgestützt sind. Der Arbeitsraum 4 und der Ausgleichsraum 5 sind mit Dämpfungsflüssigkeit 6 gefüllt. Die Trennwand 7, die den Arbeitsraum 4 und den Ausgleichsraum 5 räumlich voneinander trennt, umfasst einen Düsenkäfig 27 mit einer oberen Düsenscheibe 28 und einer unteren Düsenscheibe 29, wobei zwischen den beiden Düsenscheiben 28, 29 die Membran 26, die aus einem gummielastischen Werkstoff besteht, zur Isolierung höherfrequenter kleinamplitudiger Schwingungen schwingfähig angeordnet ist.
Die Trennwand 7 weist zur Dämpfung niederfrequenter großamplitudiger Schwingungen einen Dämpfungskanal 30 auf, der den Arbeitsraum 4 und den Ausgleichsraum 5 flüssigkeitsleitend miteinander verbindet.

Die Trennwand 7 weist eine zentral angeordnete erste Durchbrechung 9 auf, die durch den Verschlusskörper 8 bedarfsweise in Offen- oder GeschlossenStellung bringbar ist. Dabei wird der Verschlusskörper 8 durch ein Stellglied 10 einer Stellvorrichtung 11 bewegt.
Das Stellglied 10 der Stellvorrichtung 11 ist elektrisch betätigbar, wobei alle hier gezeigten Stellvorrichtungen 11 durch einen elektrisch ansteuerbaren Drehmagnet 24 gebildet sind, mit einer als Stellglied 10 ausgebildeten Welle 25.

Im Gegensatz zu anderen elektrisch betätigbaren Stellvorrichtungen, beispielsweise zu einem elektromotorischen Antrieb, der zusammen mit einem Übersetzungsgetriebe zur Anwendung gelangen muss und dadurch teile- und damit auch kostenintensiv ist, sind Drehmagnete 24 in unterschiedlichsten Ausführungen für unterschiedlichste Anwendungsfälle kostengünstig verfügbar und können im erfindungsgemäßen Hydrolager ohne weitere Bauteile, wie beispielsweise Übersetzungsgetriebe, zur Anwendung gelangen.
Durch die Verwendung eines Drehmagneten 24 können bei kleinem Bauraumbedarf relativ schnell große zweite Durchbrechungen 15/Tilgeröffnungen freigegeben werden. Drehmagnete 24 stellen eine kompakte und kostengünstige Lösung für elektrisch schaltbare Hydrolager mit allen vorteilhaften Eigenschaften der bekannten pneumatisch schaltbaren Hydrolager dar.

Der Verschlusskörper 8 ist durch ein sich in Richtung der eingeleiteten Schwingungen 12 erstreckendes hohlzylinderförmiges Gehäuse 13 mit in radialer Richtung 14 offenen zweiten Durchbrechungen 15.1, ..., 15.6 in der Gehäusewand 16 gebildet. Das Schließglied 18 ist in Umfangsrichtung 17 des Gehäuses 13 verdrehbar und drehfest mit dem Stellglied 10 verbunden. Das Schließglied 18 weist eine der Anzahl der Durchbrechungen 15.1, ..., 15.6 entsprechende Anzahl von Schließflügeln 19.1, ..., 19.6 auf.

Der Ausgleichsraum 5 ist auf seiner der Trennwand 7 axial abgewandten Seite durch die Abschlussmembran 20 begrenzt, wobei die Abschlussmembran 20 aus einem gummielastischen Werkstoff besteht und rollbalgförmig ausgebildet ist. Die Abschlussmembran 20 ist zentral von der Stellvorrichtung 10, dem Stellglied 10 oder dem Schließglied 18 durchdrungen, so dass die Abschlussmembran 20 ringförmig ausgebildet ist und mit ihrem radial inneren Rand 21 flüssigkeitsdicht an den genannten Teilen festgelegt ist.
Auf der dem Ausgleichsraum 5 axial abgewandten Seite ist die Abschlussmembran 20 von einem Deckel 23 überdeckt, in dem die Stellvorrichtung 11 ortsfest angeordnet ist.

In Fig. 1 ist das erste Ausführungsbeispiel eines Hydrolagers gezeigt. Der Drehmagnet 24 ist im Deckel 23 ortsfest angeordnet und weist eine Welle 25 auf, auf der das Schließglied 18 drehfest angeordnet ist. Das Schließglied 18 weist außenumfangsseitig umlaufend eine Einschnürung 35 auf, in der der radial innere Rand 21 der Abschlussmembran 20 aufgenommen ist. Der radial innere Rand 21 ist außenumfangsseitig von einem O-ringförmigen Spannring 22 umschlossen, der für eine sichere Befestigung des Randes 21 am Schließglied 18 sorgt.

Die Befestigung des radial inneren Randes 21 am Außenumfang des Schließglieds 18 kann ortsfest, bevorzugt jedoch relativ verdrehbar erfolgen.
Bei einer ortsfesten Befestigung des Randes 21 am Schließglied 18 wird dieser Rand 21 bei Schwenkbewegungen des Schließglieds 18 elastisch verformt. Bei einer relativ verdrehbaren Festlegung des Randes 21 am Schließglied 18 weist zumindest eine der einander berührenden Oberflächen einen geringen Reibungskoeffizienten auf. Dieser kann beispielsweise dadurch erreicht werden, dass das Schließglied 18 aus einem PTFE-Werkstoff besteht oder dadurch, dass zumindest eine der einander berührenden Oberflächen mit einer reibungsverringernden Oberflächenbeschichtung versehen ist.

Die untere Düsenscheibe 29 bildet das Gehäuse 13 des Verschlusskörpers 8.

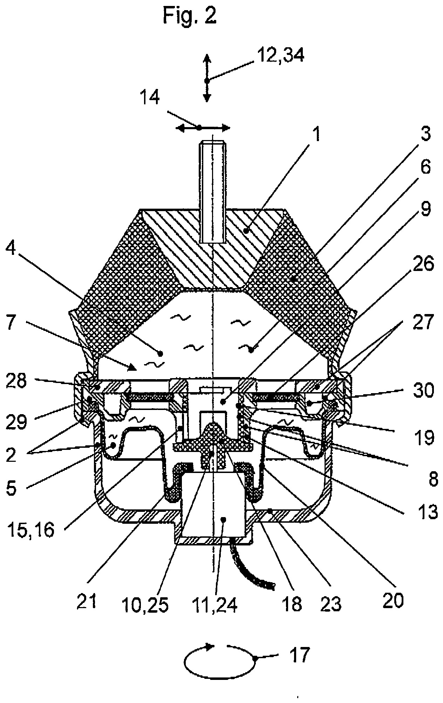

In Fig. 2 ist ein zweites Ausführungsbeispiel des Hydrolagers gezeigt, das sich vom Ausführungsbeispiel gemäß Fig. 1 nur dadurch unterscheidet, dass das Schließglied 18 abweichend gestaltet ist und dass der radial innere Rand 21 der Abschlussmembran 20 ortsfest am Gehäuse der Stellvorrichtung 11 festgelegt ist. Das Gehäuse der Stellvorrichtung 11 führt während der bestimmungsgemäßen Verwendung des Hydrolagers, bezogen auf den Deckel 23 und den radial inneren Rand 21 keine Bewegungen aus. Die flüssigkeitsdichte Befestigung des radial inneren Randes 21 an der Stellvorrichtung 11 ist dadurch problemlos und einfach.

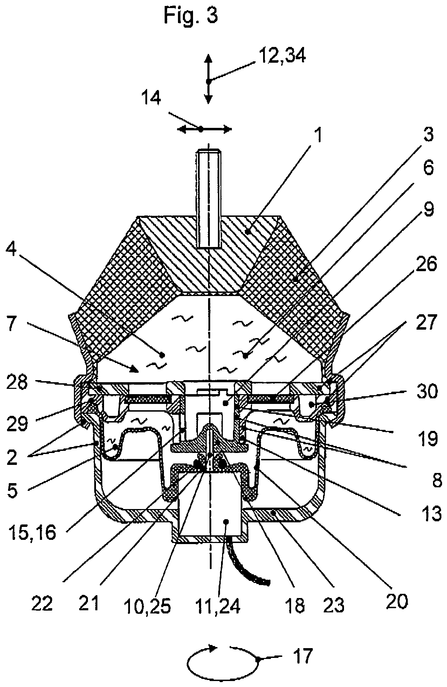

In Fig. 3 ist ein drittes Ausführungsbeispiel des Hydrolagers gezeigt, das sich von den beiden zuvor beschriebenen Ausführungsbeispielen durch die Befestigung des radial inneren Randes 21 unterscheidet. Im hier gezeigten Ausführungsbeispiel umschließt der radial innere Rand 21 die Welle 25 relativ verdrehbar, anliegend und dichtend und ist durch einen O-ringförmigen Spannring 22 unter elastischer Vorspannung dichtend an diese angepresst. Radial außerhalb des Randes 21 ist die Abschlussmembran 21 auf dem Gehäuse des Drehmagnets 24 abgestützt und relativ zu diesem nicht verdrehbar.

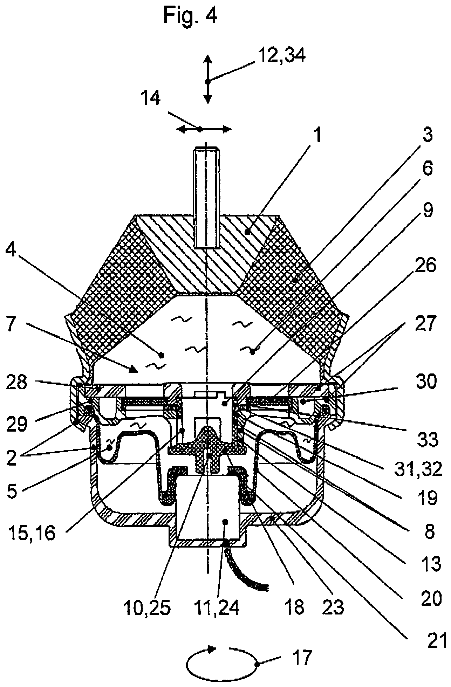

In Fig. 4 ist ein viertes Ausführungsbeispiel des Hydrolagers gezeigt, das sich vom Ausführungsbeispiel Fig. 2 dadurch unterscheidet, dass das Schließglied 18 mit einer Verstelleinrichtung 31 zur Verstellung der Schwingfähigkeit der Membran 26 ausgebildet ist. Die Verstelleinrichtung 31 ist durch den sich radial nach außen erstreckenden gitterförmigen Ringvorsprung 32 gebildet, der im hier gezeigten Ausführungsbeispiel die Membran 26 im Bereich ihres Innenumfangs und im Bereich ihres Außenumfangs untergreift. Der Ringvorsprung 32 hat auf seiner der Membran 26 axial zugewandten Stirnseite eine sich in Umfangsrichtung 17 keilförmig erstreckende Klemmfläche 33, die die Membran 26, wie hier dargestellt, klemmt.

Ist die erste Durchbrechung 9 demgegenüber verschlossen, bewegen sich also die Schließflügel 19.1, ..., 19.6 flüssigkeitsdicht vor die Durchbrechungen 15.1, ..., 15.6, so dass der Verschlusskörper 8 für die Dämpfungsflüssigkeit verschlossen ist, wird die Klemmung/Arretierung der Membran durch den Ringvorsprung 32 aufgehoben und die Membran 26 ist zur Isolierung höherfrequenter kleinamplitudiger Schwingungen zwischen Arbeitsraum 4 und Ausgleichsraum 5 schwingfähig.

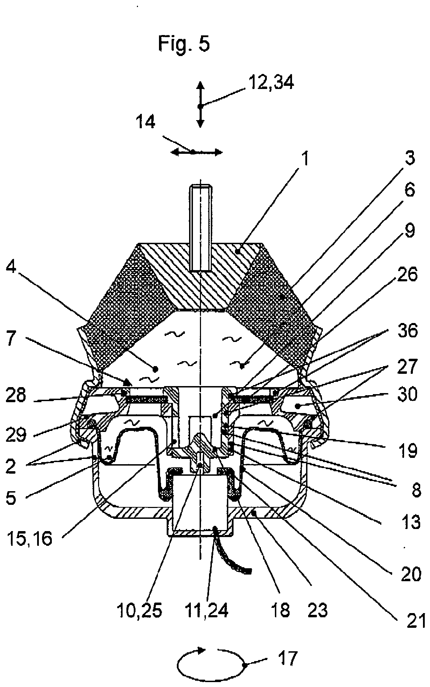

In Fig. 5 ist ein fünftes Ausführungsbeispiel eines Hydrolagers ähnlich dem Ausführungsbeispiel aus Fig. 2 gezeigt, wobei das Hydrolager aus Fig. 5 eine reduzierte Anzahl von Bauteilen aufweist.
Der Düsenkäfig 27 umfasst die untere Düsenscheibe 29, die, wie auch in den Ausführungsbeispielen der Fig. 1 bis 4, das Gehäuse 13 des Verschlusskörpers 8 bildet. Abweichend von den Ausführungsbeispielen der Fig. 1 bis 4 umfasst die untere Düsenscheibe 29 den Dämpfungskanal 30.
Das Schließglied 18 durchgreift das Gehäuse 13 in Richtung des Arbeitsraums 4 vollständig und weist im Arbeitsraum 4 einen sich radial nach außen erstreckenden Flansch 36 auf, der die obere Düsenscheibe 28 bildet. Das Schließglied 18 umfasst demnach nicht nur die Schließflügel 19.1, ..., 19.6 sondern auch die obere Düsenscheibe 28.

Die jeweiligen Ausgestaltungen aus den Hydrolagern gemäß Fig. 1 bis 5 können auch beliebig miteinander kombiniert werden. So kann beispielsweise jede Art der Befestigung des inneren Randes 21 an der Stellvorrichtung 11 oder dem Stellglied 10 oder dem Schließglied 18 mit der Art der Trennwand 7 aus Fig. 5 und/oder der Verstelleinrichtung 31 zur Verstellung der Schwingfähigkeit der Membran 26 aus Fig. 4 kombiniert werden.

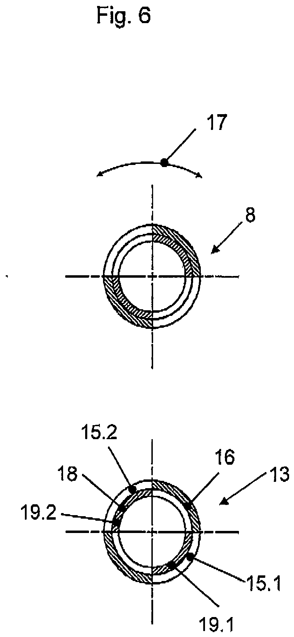

In den Fig. 6 bis 8 ist jeweils ein Ausführungsbeispiel eines Verschlusskörpers 8 in quergeschnittener Darstellung gezeigt, wie er in den Hydrolagern aus den Fig. 1 bis 5 zur Anwendung gelangen kann.

Im jeweils oberen Teil der Darstellung sind die zweiten Durchbrechungen 15.1,... von den Schließflügeln 19.1, ... des Schließglieds 18 nicht überdeckt. Ein Flüssigkeitsaustausch der Dämpfungsflüssigkeit 6 aus dem Arbeitsraum 4 in den Ausgleichsraum 5 und wieder zurück durch die erste Durchbrechung 9 hindurch kann dadurch zur Tilgung von Leerlaufschwingungen erfolgen.

Ein Verschlusskörper 8 in Offen-Stellung ist auch jeweils in den Fig. 1 bis 5 dargestellt.

Im unteren Teil der Darstellung ist der Verschlusskörper 8 demgegenüber verschlossen. Die erste Durchbrechung 9 kann von der Dämpfungsflüssigkeit 6 nicht durchströmt werden. Dieser Betriebszustand liegt immer dann vor, wenn die Verbrennungskraftmaschine, die vom Hydrolager abgestützt wird, oberhalb ihrer Leerlaufdrehzahl betrieben wird.

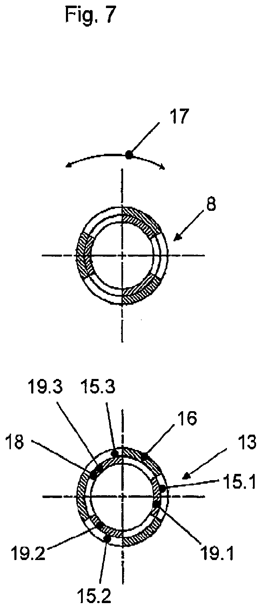

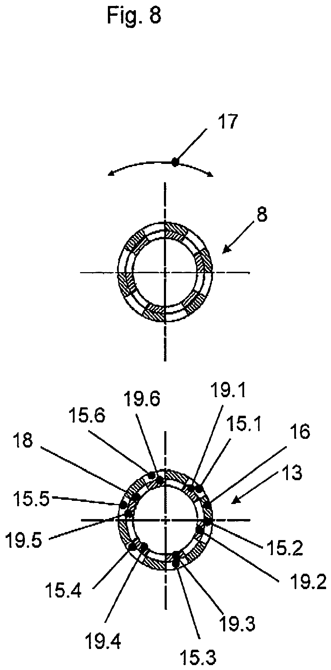

In Fig. 6 beträgt der Drehwinkel 90°, in Fig. 7 60° und in Fig. 8 30°.

Die genannten Drehwinkel legt das jeweilige Schließglied 18, das auf der Welle 25 angeordnet ist, zurück, wenn der Drehmagnet 24 elektrisch betätigt wird.

## Patentansprüche

1. Hydrolager, umfassend ein Traglager (1) und ein Auflager (2), die durch einen im Wesentlichen hohlkegelförmig ausgebildeten Federkörper (3) aus gummielastischem Werkstoff aufeinander abgestützt sind und einen Arbeitsraum (4) und einen Ausgleichsraum (5) begrenzen, die mit Dämpfungsflüssigkeit (6) gefüllt und auf ihren einander axial zugewandten Seiten durch eine Trennwand (7) räumlich voneinander getrennt und flüssigkeitsleitend miteinander verbunden sind, wobei die Trennwand (7) eine durch einen Verschlusskörper (8) verschließbare erste Durchbrechung (9) aufweist und wobei der Verschlusskörper (8) durch ein Stellglied (10) einer Stellvorrichtung (11) bedarfsweise in Offen- oder Geschlossenstellung bringbar ist, wobei der Verschlusskörper (8) durch ein sich in Richtung der eingeleiteten Schwingungen (12) erstreckendes, im Wesentlichen hohlzylinderförmiges Gehäuse (13) mit zumindest einer in radialer Richtung (14) offenen zweiten Durchbrechung (15) in der Gehäusewand (16) gebildet ist und zumindest ein in Umfangsrichtung (17) des Gehäuses (13) verdrehbares Schließglied (18) für die zweite Durchbrechung (15) aufweist, wobei das Stellglied (10) der Stellvorrichtung (11) elektrisch betätigbar ist, wobei das Stellglied (10) und das Schließglied (18) drehfest miteinander verbunden sind, **dadurch gekennzeichnet, dass** die Trennwand (7) zur Isolierung höherfrequenter kleinamplitudiger Schwingungen eine Membran (26) umfasst, die schwingfähig zwischen dem Arbeitsraum (4) und dem Ausgleichsraum (5) angeordnet ist, und dass das Schließglied (18) mit einer Verstelleinrichtung (31) zur Verstellung der Schwingfähigkeit der Membran (26) ausgebildet ist.

2. Hydrolager nach Anspruch 1, **dadurch gekennzeichnet, dass** mehrere gleichmäßig in Umfangsrichtung (17) verteilt angeordnete zweite Durchbrechungen (15.1, 15.2, 15.3, 15.4, 15.5, 15.6) durch eine entsprechende Anzahl gleichmäßig in Umfangsrichtung (17) verteilt angeordneter Schließflügel (19.1, 19.2, 19.3, 19.4, 19.5, 19.6) des Schließglieds (18) verschließbar sind.

3. Hydrolager nach einem der Ansprüche 1 oder 2, **dadurch gekennzeichnet, dass** jeweils zwei bis sechs zweite Durchbrechungen (15.1, 15.2, 15.3, 15.4, 15.5, 15.6) und Schließflügel (19.1, 19.2, 19.3, 19.4, 19.5, 19.6) zur Anwendung gelangen.

4. Hydrolager nach einem der Ansprüche 1 bis 3, **dadurch gekennzeichnet, dass** das Schließglied (18) aus einem polymeren Werkstoff besteht.

5. Hydrolager nach einem der Ansprüche 2 bis 4, **dadurch gekennzeichnet, dass** die Schließflügel (19.1, 19.2, 19.3, 19.4, 19.5, 19.6) einstückig ineinander übergehend und materialeinheitlich ausgebildet sind.

6. Hydrolager nach einem der Ansprüche 1 bis 5, **dadurch gekennzeichnet, dass** das Gehäuse (13) und die Trennwand (7) einstückig ineinander übergehend und materialeinheitlich ausgebildet sind.

7. Hydrolager nach einem der Ansprüche 1 bis 6, **dadurch gekennzeichnet, dass** die erste Durchbrechung (9) zentral in der Trennwand (7) angeordnet ist.

8. Hydrolager nach einem der Ansprüche 1 bis 7, **dadurch gekennzeichnet, dass** die offene erste Durchbrechung (9) als Tilgerkanal zur Tilgung von Leerlaufschwingungen einer Verbrennungskraftmaschine ausgebildet ist.

9. Hydrolager nach einem der Ansprüche 1 bis 8, **dadurch gekennzeichnet, dass** der Ausgleichsraum (5) auf der der Trennwand (7) axial abgewandten Seite durch eine rollbalgförmig ausgebildete, im Wesentlichen drucklos Volumen aufnehmende Abschlussmembran (20) begrenzt ist, dass die Abschlussmembran (20) ringförmig ausgebildet ist und einen radial inneren Rand (21) aufweist und dass die Abschlussmembran (20) mit ihrem Rand (21) flüssigkeitsdicht mit der Stellvorrichtung (11) oder dem Stellglied (10) oder dem Schließglied (18) verbunden ist.

10. Hydrolager nach Anspruch 9, **dadurch gekennzeichnet, dass** der Rand (21) durch einen Spannring (22) flüssigkeitsdicht an der Stellvorrichtung (11) oder dem Stellglied (10) oder am Schließglied (18) festgelegt ist.

11. Hydrolager nach einem der Ansprüche 9 oder 10, **dadurch gekennzeichnet, dass** der Rand (21) am Stellglied (10) oder am Schließglied (18) relativ verdrehbar festgelegt ist.

12. Hydrolager nach einem der Ansprüche 1 bis 11, **dadurch gekennzeichnet, dass** die Stellvorrichtung (11) ortsfest mit dem Auflager (2) verbunden ist.

13. Hydrolager nach einem der Ansprüche 1 bis 12, **dadurch gekennzeichnet, dass** das Auflager (2) einen im Wesentlichen topfförmigen Deckel (23) umfasst, der auf der der Trennwand (7) axial abgewandten Seite der Abschlussmembran (20) angeordnet ist und dass die Stellvorrichtung (11) ortsfest im Deckel (23) angeordnet ist.

14. Hydrolager nach einem der Ansprüche 1 bis 13, **dadurch gekennzeichnet, dass** die Stellvorrichtung (11) durch einen elektrisch ansteuerbaren Drehmagnet (24) mit einer als Stellglied (10) ausgebildeten Welle (25) gebildet ist.

15. Hydrolager nach einem der Ansprüche 1 bis 14, **dadurch gekennzeichnet, dass** die Membran (26) aus einem gummielastischen Werkstoff besteht.

16. Hydrolager nach einem der Ansprüche 1 bis 15, **dadurch gekennzeichnet, dass** die Trennwand (7) einen Düsenkäfig (27) umfasst, mit einer oberen Düsenscheibe (28) und mit einer unteren Düsenscheibe (29), wobei zwischen den Düsenscheiben (28, 29) die Membran (26) angeordnet ist.

17. Hydrolager nach einem der Ansprüche 1 bis 16, **dadurch gekennzeichnet, dass** der Arbeitsraum (4) und der Ausgleichsraum (5) zur Dämpfung niederfrequenter großamplitudiger Schwingungen durch einen Dämpfungskanal (30) flüssigkeitsleitend miteinander verbunden sind.

18. Hydrolager nach einem der Ansprüche 1 bis 17, **dadurch gekennzeichnet, dass** das Schließglied (18) aussenumfangsseitig einen sich radial nach außen erstreckenden Ringvorsprung (32) aufweist, der die Membran (26) zumindest teilweise untergreift, wobei der Ringvorsprung (32) auf seiner der Membran (26) axial zugewandten Stirnseite eine sich in Umfangsrichtung (17) keilförmig erstreckende Klemmfläche (33) aufweist.

19. Hydrolager nach Anspruch 18, **dadurch gekennzeichnet, dass** der Ringvorsprung (32) in axialer Richtung (34) zwischen der oberen (28) und der unteren Düsenscheibe (29) angeordnet ist.

## Claims

1. Hydromount, comprising a support mount (1) and a support (2), which rest against one another supported by a spring body (3) of rubber-elastic material and of substantially hollow-conical design and delimit a working chamber (4) and a compensation chamber (5), which are filled with damping liquid (6) and are spatially separated from one another on their axially facing sides by a partition wall (7) and are connected to one another in a liquid-conducting manner, the partition wall (7) having a first opening (9) which can be sealed by a sealing body (8), and the sealing body (8) being able to be brought, as required, into the open or closed position by an actuator (10) of an actuating device (11), the sealing body (8) being formed by a substantially hollow cylindrical housing (13) which extends in the direction of the introduced vibrations (12) and has at least one second opening (15) which is open in the radial direction (14) in the housing wall (16), and has at least one sealing member (18) for the second opening (15) which can be rotated in the circumferential direction (17) of the housing (13), the actuator (10) of an actuating device (11) being electrically operable, and the actuator (10) and the sealing member (18) being non-rotatably connected to each other
**characterised in that** the partition wall (7) comprises a diaphragm (26) for isolating higher-frequency small amplitude oscillations, the diaphragm (26) being arranged oscillatably between the working chamber (4) and the compensation chamber (5), and **in that** the sealing member (18) is designed with an adjusting device (31) for adjusting the oscillatability of the diaphragm (26).

2. Hydromount according to claim 1, **characterised in that** a plurality of second openings (15.1, 15.2, 15.3, 15.4, 15.5, 15.6) arranged uniformly distributed in the circumferential direction (17) can be sealed by a corresponding number of sealing wings (19.1, 19.2, 19.3, 19.4, 19.5, 19.6) of the sealing member (18) arranged uniformly distributed in the circumferential direction (17).

3. Hydromount according to one of claims 1 or 2, **characterised in that** two to six second openings (15.1, 15.2, 15.3, 15.4, 15.5, 15.6) and two to six sealing wings (19.1, 19.2, 19.3, 19.4, 19.5, 19.6) are used.

4. Hydromount according to one of claims 1 to 3, **characterised in that** the sealing member (18) consists of a polymeric material.

5. Hydromount according to one of claims 2 to 4, **characterised in that** the sealing wings (19.1, 19.2, 19.3, 19.4, 19.5, 19.6) are integrally formed and transitioning into one another and are of the same material.

6. Hydromount according to one of claims 1 to 5, **characterised in that** the housing (13) and the partition wall (7) are integrally transitioning into one another and are of the same material.

7. Hydromount according to one of claims 1 to 6, **characterised in that** the first opening (9) is arranged centrally in the partition wall (7).

8. Hydromount according to one of claims 1 to 7, **characterised in that** the open first opening (9) is designed as an absorber channel for absorbing idling vibrations of an internal combustion engine.

9. Hydromount according to one of claims 1 to 8, **characterised in that** the compensation chamber (5) on the side axially facing away from the partition wall (7) is delimited by a sealing diaphragm (20) which is designed in the form of a rolling bellows and takes up essentially unpressurized volume, **in that** the sealing diaphragm (20) has an annular design and has a radially inner edge (21), and **in that** the sealing diaphragm (20) is connected with its edge (21) in a liquid-tight manner to the actuating device (11) or the actuating member (10) or the sealing member (18).

10. Hydromount according to claim 9, **characterised in that** the edge (21) is fixed in a liquid-tight manner to the actuating device (11) or the actuator (10) or to the sealing member (18) by a clamping ring (22).

11. Hydromount according to one of claims 9 or 10, **characterised in that** the edge (21) is fixed to the actuator (10) or to the sealing member (18) in a relatively rotatable manner.

12. Hydromount according to one of claims 1 to 11, **characterised in that** the adjusting device (11) is fixedly connected to the support (2).

13. Hydromount according to one of claims 1 to 12, **characterised in that** the support (2) comprises a substantially cup-shaped cover (23) which is arranged on the side of the sealing membrane (20) axially facing away from the partition wall (7), and **in that** the adjusting device (11) is arranged fixedly in the cover (23).

14. Hydromount according to one of claims 1 to 13, **characterised in that** the adjusting device (11) is formed by an electrically controllable rotary magnet (24) with a shaft (25) designed as an actuator (10).

15. Hydromount according to one of claims 1 to 14, **characterised in that** the diaphragm (26) consists of a rubber-elastic material.

16. Hydromount according to one of claims 1 to 15, **characterised in that** the partition wall (7) comprises a nozzle cage (27) having an upper nozzle disc (28) and a lower nozzle disc (29), the diaphragm (26) being arranged between the nozzle discs (28, 29).

17. Hydromount according to one of claims 1 to 16, **characterised in that** the working chamber (4) and the compensation chamber (5) for damping low-frequency large amplitude vibrations are connected to one another in a fluid-conductive manner by a damping channel (30).

18. Hydromount according to one of claims 1 to 17, **characterised in that** the sealing member (18) has on the outside circumferential side an annular projection (32) extending radially outward which at least partially engages under the diaphragm (26), the annular projection (32) having on its end face axially facing the diaphragm (26) a wedge-shaped clamping surface (33) extending in the circumferential direction (17).

19. Hydromount according to claim 18, **characterised in that** the annular projection (32) is arranged in the axial direction (34) between the upper nozzle disc (28) and the lower nozzle disc (29).

## Revendications

1. Support hydraulique comportant un support porteur (1) et un appui (2) qui sont supportés l'un sur l'autre par un corps élastique (3) réalisé sensiblement sous forme conique creuse en matériau présentant l'élasticité du caoutchouc et qui délimitent une chambre de travail (4) et une chambre de compensation (5) remplies de liquide amortisseur (6) et séparées dans l'espace l'une de l'autre par une cloison de séparation (7) sur leurs faces tournées axialement l'une vers l'autre et reliées l'une à l'autre sur le plan fluidique,
dans lequel
la cloison de séparation (7) présente une première traversée (9) refermable par un corps d'obturation (8), et
le corps d'obturation (8) peut être amené en position ouverte ou en position fermée, selon les besoins, par un organe de positionnement (10) d'un dispositif de positionnement (11),
le corps d'obturation (8) est formé par un carter (13) sensiblement cylindrique creux s'étendant en direction des oscillations appliquées (12), ayant au moins une seconde traversée (15) ouverte en direction radiale (14) dans la paroi de carter (16) et comprend au moins un obturateur (18) mobile en rotation dans la direction périphérique (17) du carter (13), pour la seconde traversée (15),
l'organe de positionnement (10) du dispositif de positionnement (11) est actionnable par voie électrique,
l'organe de positionnement (10) et l'obturateur (18) sont reliés solidairement en rotation l'un à l'autre,
**caractérisé en ce que**
la cloison de séparation (7) comprend une membrane (26) pour l'isolation vis-à-vis des oscillations de haute fréquence et de faible amplitude, qui est disposée de manière à pouvoir osciller entre la chambre de travail (4) et la chambre de compensation (5), et **en ce que**
l'obturateur (18) est réalisé avec un moyen de réglage (31) pour régler l'aptitude de la membrane (26) à osciller.

2. Support hydraulique selon la revendication 1,
**caractérisé en ce que**
plusieurs secondes traversées (15.1, 15.2, 15.3, 15.4, 15.5) agencées en étant réparties régulièrement en direction périphérique (17) sont refermables par un nombre correspondant d'ailettes de fermeture (19.1, 19.2, 19.3, 19.4, 19.5, 19.6) de l'obturateur (18) agencées en étant réparties régulièrement en direction périphérique (17).

3. Support hydraulique selon l'une des revendications 1 ou 2,
**caractérisé en ce que**
il est prévu deux à six secondes traversées (15.1, 15.2, 15.3, 15.4, 15.5, 15.6) et deux à six ailettes de fermeture (19.1, 19.2, 19.3, 19.4, 19.5, 19.6).

4. Support hydraulique selon l'une des revendications 1 à 3,
**caractérisé en ce que**
l'obturateur (18) est constitué en un matériau polymère.

5. Support hydraulique selon l'une des revendications 2 à 4,
**caractérisé en ce que**
les ailettes de fermeture (19.1, 19.2, 19.3, 19.4, 19.5, 19.6) sont réalisées de manière à se transformer les unes en les autres d'un seul tenant et en matériau uniforme.

6. Support hydraulique selon l'une des revendications 1 à 5,
**caractérisé en ce que**
le carter (13) et la cloison de séparation (7) sont réalisés de manière à se transformer l'un en l'autre d'un seul tenant et en matériau uniforme.

7. Support hydraulique selon l'une des revendications 1 à 6,
**caractérisé en ce que**
la première traversée (9) est disposée au centre dans la cloison de séparation (7).

8. Support hydraulique selon l'une des revendications 1 à 7,
**caractérisé en ce que**
la première traversée ouverte (9) est réalisée sous forme de canal d'atténuation pour atténuer des oscillations au ralenti d'un moteur à combustion interne.

9. Support hydraulique selon l'une des revendications 1 à 8,
**caractérisé en ce que**
sur le côté axialement détourné de la cloison de séparation (7), la chambre de compensation (5) est délimitée par une membrane terminale (20) réalisée sous forme de soufflet roulant et recevant un volume sensiblement sans pression, **en ce que**
la membrane terminale (20) est réalisée en forme annulaire et comprend une bordure radialement intérieure (21), et **en ce que**
la membrane terminale (20) est reliée par sa bordure (21) de façon étanche aux liquides au dispositif de positionnement (11) ou à l'organe de positionnement (10) ou à l'obturateur (18).

10. Support hydraulique selon la revendication 9,
**caractérisé en ce que**
la bordure (21) est fixée de façon étanche aux liquides sur le dispositif de positionnement (11) ou sur l'organe de positionnement (10) ou sur l'obturateur (18) par un anneau de serrage (22).

11. Support hydraulique selon la revendication 9 ou 10,
**caractérisé en ce que**
la bordure (21) est fixée de façon mobile en rotation sur l'organe de positionnement (10) ou sur l'obturateur (18).

12. Support hydraulique selon l'une des revendications 1 à 11,
**caractérisé en ce que**
le dispositif de positionnement (11) est relié de façon stationnaire à l'appui (2).

13. Support hydraulique selon l'une des revendications 1 à 12,
**caractérisé en ce que**
l'appui (2) comprend un couvercle (23) sensiblement en forme de pot qui est agencé sur le côté de la membrane terminale (20) axialement détourné de la cloison de séparation (7), et **en ce que**
le dispositif de positionnement (11) est agencé de façon stationnaire dans le couvercle (23).

14. Support hydraulique selon l'une des revendications 1 à 13,
**caractérisé en ce que**
le dispositif de positionnement (11) est formé par un aimant rotatif (24) pilotable par voie électrique et ayant un arbre (25) réalisé sous forme d'organe de positionnement (10).

15. Support hydraulique selon l'une des revendications 1 à 14,
**caractérisé en ce que**
la membrane (26) est constituée en un matériau présentant l'élasticité du caoutchouc.

16. Support hydraulique selon l'une des revendications 1 à 15,
**caractérisé en ce que**
la cloison de séparation (7) comprend une cage à buses (27) ayant une plaque de buse supérieure (28) et une plaque de buse inférieure (29), la membrane (26) étant agencée entre les plaques de buse (28, 29).

17. Support hydraulique selon l'une des revendications 1 à 16,
**caractérisé en ce que**
la chambre de travail (4) et la chambre de compensation (5) sont reliées sur le plan fluidique l'une à l'autre par un canal d'amortissement (30) pour amortir des oscillations de basse fréquence et de grande amplitude.

18. Support hydraulique selon l'une des revendications 1 à 17,
**caractérisé en ce que**
l'obturateur (18) comprend du côté périphérie extérieure une saillie annulaire (32) qui s'étend radialement vers l'extérieur et qui engage la membrane (26) au moins partiellement par le dessous, la saillie annulaire (32) comprenant sur son côté frontal tourné axialement vers la membrane (26) une surface de coincement (33) qui s'étend en forme de coin en direction périphérique (17).

19. Support hydraulique selon la revendication 18,
**caractérisé en ce que**
la saillie annulaire (32) est agencée en direction axiale (34) entre la plaque de buse supérieure (28) et la plaque de buse inférieure (29).
